# FASCICULE DE BREVET EUROPEEN

(11) **EP 2 158 672 B1**
(45) Date de publication et mention de la délivrance du brevet: **29.11.2017**
(21) Numéro de dépôt: 08805887.0
(22) Date de dépôt: 29.05.2008
(51) Int. Cl.: H02P 1/16, H02P 6/20, H02P 9/08

(54) **MACHINE ELECTRIQUE TOURNANTE ET SON PROCEDE DE COMMANDE**
ELEKTRISCHE DREHMASCHINE UND VERFAHREN ZU IHRER STEUERUNG
ROTARY ELECTRIC MACHINE AND METHOD FOR CONTROLLING SAME

(30) Priorité: 22.06.2007 FR 0755979
(43) Date de publication de la demande: 03.03.2010
(73) Titulaire: Valeo Equipements Electriques Moteur, 94046 Créteil Cedex (FR)
(72) Inventeur: BODIN, Ludovic, 93110 Rosny sous Bois (FR); CHEMIN, Michaël, 51700 Festigny (FR)
(74) Mandataire: de Lambilly Delorme, Marie Pierre
(86) Numéro de dépôt international: PCT/FR2008/050944
(87) Numéro de publication internationale: WO 2009/000996

(56) Documents cités:
- EP-A- 1 469 587
- FR-A- 2 875 556
- JP-A- 55 077 381
- US-A- 5 754 031

## Description

La présente invention concerne une machine électrique tournante et son procédé de commande.

Les machines électriques tournantes sont formées d'un rotor et d'un stator, l'un de ces éléments générant un champ magnétique tournant de manière à entrainer l'autre élément en rotation.

En pratique, le stator est en général formé de plusieurs phases d'enroulement réparties sur sa périphérie et alimenté successivement de manière à former le champ magnétique tournant.

Dans ce contexte, le rotor porte un enroulement qui doit être parcouru par un courant ayant une intensité supérieure à une valeur donnée afin d'être suffisamment magnétisé pour être entrainé par le champ magnétique tournant.

On procède couramment de ce fait, en préalable à la génération du champ magnétique tournant par le stator, à une étape de pré-magnétisation dans laquelle on applique une tension aux bornes de l'enroulement du rotor, ce qui fait naître un courant croissant dans ce dernier.

La demande de brevet FR 2 875 556 décrit par exemple une solution pour anticiper autant que faire se peut le besoin de démarrer la machine électrique et par conséquent la nécessité d'effectuer une phase de pré-magnétisation. Dans ce document, le démarrage de la machine électrique par l'excitation du stator est réalisé avec un retard prédéterminé (150 ms dans l'exemple donné) par rapport au début de la pré-magnétisation.

Cette temporisation est calculée pour assurer une magnétisation suffisante du rotor dans les différentes conditions électriques rencontrées par le système et le temps de pré-magnétisation n'est donc pas optimal, en particulier dans les systèmes où l'on utilise un réservoir d'énergie qui entraine une tension variable dans d'assez larges proportions, mais également du fait de l'incertitude existant sur les valeurs électriques dans tout type de système.

Afin de répondre à ce problème, et notamment donc d'optimiser l'énergie consommée pour la pré-magnétisation du rotor, l'invention propose une machine électrique tournante comprenant un premier élément apte à générer un champ magnétique tournant par rapport au premier élément et un second élément pourvu d'un enroulement apte à être parcouru par un courant de manière à ce que le champ magnétique tournant entraine le second élément en rotation, caractérisée par des moyens de mesure d'une grandeur électrique au moins liée audit courant et des moyens pour initier la génération du champ magnétique tournant à un instant déterminé en fonction de la grandeur électrique mesurée.

Selon un premier mode de réalisation, ladite grandeur électrique est ledit courant. Les moyens pour initier la génération du champ magnétique tournant sont par exemple aptes dans ce cas à initier ladite génération lorsque le courant mesuré atteint une valeur seuil, ce qui permet de réaliser une phase de pré-magnétisation précisément limitée à ce qui est nécessaire pour obtenir une magnétisation optimale du rotor.

Selon un second mode de réalisation, la grandeur électrique est une tension appliquée audit enroulement.

Les moyens pour initier la génération du champ magnétique tournant sont par exemple alors aptes à initier ladite génération après une durée d'application de ladite tension déterminée en fonction de la grandeur électrique mesurée, ce qui permet également d'adapter la durée afin d'obtenir une pré-magnétisation optimale.

Dans un exemple de mise en oeuvre de l'invention, la machine électrique tournante est agencée pour être intégrée dans un système à tension variable pouvant varier entre deux valeurs limites, par exemple entre 14V et 28V ou entre 12V et 25V.

Ce système peut, le cas échéant, être agencé pour pouvoir stocker de l'énergie électrique issue d'un freinage du véhicule, notamment à l'aide d'une ou plusieurs super-capacités.

L'invention est particulièrement bien adaptée à ce type de système car elle permet d'optimiser le temps de pré-magnétisation en fonction de la tension qui est variable. Notamment lorsque la tension du réseau de bord du véhicule est élevée, le temps pour la pré-magnétisation peut être réduite par rapport au cas où la tension est faible.

L'invention propose également un procédé de commande d'une machine électrique tournante comprenant un premier élément apte à générer un champ magnétique tournant par rapport au premier élément et un second élément pourvu d'un enroulement apte à être parcouru par un courant de manière à ce que le champ magnétique tournant entraine le second élément en rotation, caractérisé par les étapes suivantes :
- mesure d'une grandeur électrique au moins liée audit courant ;
- génération du champ magnétique tournant à partir d'un instant déterminé en fonction de la grandeur électrique mesurée.

Les caractéristiques optionnelles de la machine électrique présentées ci-dessus s'appliquent éventuellement de la même manière à ce procédé.

D'autres caractéristiques et avantages de l'invention apparaitront mieux à la lumière de la description qui suit, faite en référence aux dessins annexés dans lesquels :
- la figure 1 représente le schéma électrique d'une machine électrique tournante triphasée réversible conforme aux enseignements de l'invention ;
- la figure 2 représente l'évolution du courant dans l'enroulement du rotor de la machine de la figure 1.

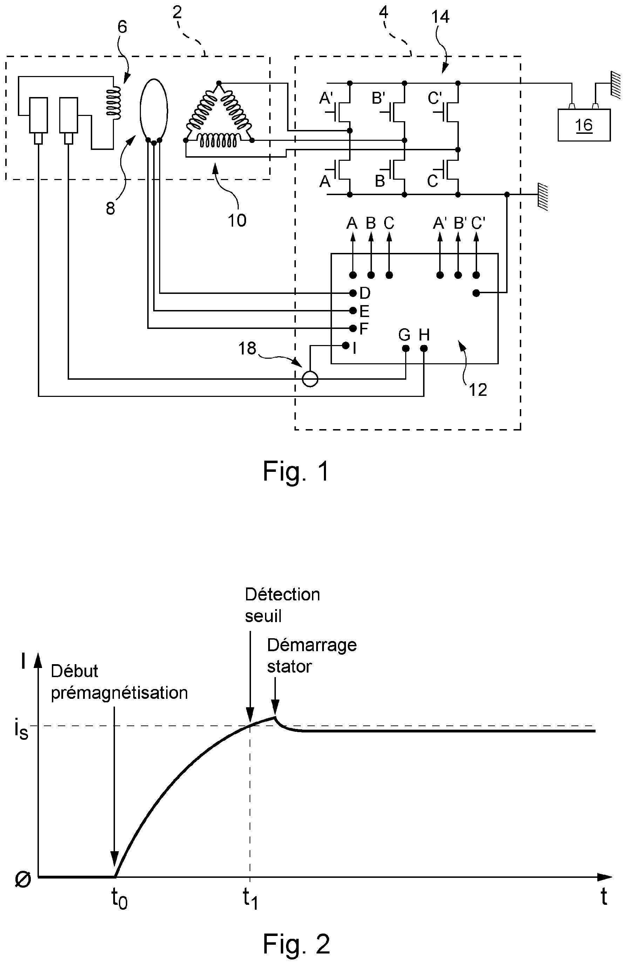

La machine électrique tournante représentée à la figure 1 comprend pour l'essentiel un ensemble mécanique 2 formé notamment par un rotor et un stator et un module électronique 4 comprenant un circuit de puissance 14 et un circuit de commande 12.

Le module électronique 4 est alimenté, ici directement, par la batterie 16 du véhicule dans lequel est monté la machine électrique tournante.

Selon une variante où l'application de l'invention est particulièrement intéressante, le module électronique 4 pourrait être connecté à la batterie 16 par l'intermédiaire d'un circuit de stockage d'énergie électrique, formé par exemple d'une super-capacité et d'un convertisseur continu-continu.

Dans ce cas en effet, le module électronique 4 est alimenté par la super-capacité qui est quant à elle reliée à la batterie par l'intermédiaire du convertisseur continu-continu (ce dernier permettant un fonctionnement correct malgré une tension variable, par exemple entre 12 V et 25 V, au niveau de la super-capacité de stockage d'énergie électrique, et une tension relativement stable, à environ 12 V, de la batterie).

Sur le plan électrique, le rotor de l'ensemble mécanique 2 porte un enroulement 6, tandis que le stator qui lui est associé porte trois enroulements 10 aptes à générer un champ magnétique tournant grâce à l'injection successive dans les différents enroulements 10 d'un courant au moyen d'interrupteurs commandés du circuit de puissance 14.

Un capteur de position 8 est également prévu pour indiquer la position du rotor au circuit de commande 12 (connexions D, E, F) afin de permettre une commande précise par ce dernier des interrupteurs commandés (aux moyens des signaux A, B, C et A', B', C').

Le rotor (qui porte l'enroulement 6) est par ailleurs couplé au moteur thermique du véhicule et la machine électrique tournante a ainsi au moins une fonction de démarreur, lorsque le circuit de commande 12 provoque la fermeture et l'ouverture des interrupteurs commandés appropriés du circuit de puissance 14 de manière à injecter du courant de la batterie 16 dans les différents enroulements 10 du stator afin d'entrainer en rotation le rotor, et par conséquent le moteur.

La machine électrique tournante peut également (mais non nécessairement) avoir une fonction d'alternateur auquel cas, lorsque le moteur tourne, la rotation du rotor au sein du stator entraine la génération de courant à travers le circuit de puissance 14 à destination de la batterie 16, qui est de ce fait rechargée. On dit alors que la machine tournante est réversible.

Le module électronique 4 comprend en outre un circuit 18 de mesure du courant dans l'enroulement 6 du rotor. Comme visible sur la figure 1, l'enroulement 6 du rotor est connecté à deux bornes G, H du circuit de commande 12 aux moyens de câbles dont l'un porte le circuit 18 de mesure du courant, l'information mesurée étant reçue par le circuit de commande 12 au niveau d'une borne I.

En référence à la figure 2, on va à présent décrire une phase de démarrage de la machine électrique tournante en mode démarreur.

Lorsqu'il est déterminé qu'un démarrage du moteur (et par conséquent un lancement de la machine électrique) doit avoir lieu, par exemple selon les enseignements du document FR 2 875 556 (ou selon toute autre méthode adéquate), le circuit de commande 12 débute la phase de pré-magnétisation en appliquant une tension (par exemple la tension de la batterie) aux bornes G, H connectées à l'enroulement 6 du rotor (t₀ en figure 2).

Selon la variante envisagée plus haut, la tension appliquée aux bornes de l'enroulement 6 pourrait être par exemple la tension aux bornes de la super-capacité, variable donc dans une large mesure. Dans le cas représenté en figure 1, la tension appliquée à l'enroulement 6 peut d'ailleurs également être variable par exemple en fonction de la charge de la batterie 16 ou d'autres paramètres pouvant affecter la tension, comme par exemple l'état de vieillissement des différents composants et la température extérieure.

L'application d'une tension aux bornes G, H de l'enroulement 6 provoque, en l'absence de charge, une montée rapide du courant dans l'enroulement 6.

Le circuit de commande 12 surveille, au moyen du circuit de mesure 18, la valeur du courant parcourant l'enroulement 6 jusqu'à ce que cette valeur atteigne un seuil prédéterminé iₛ (par exemple d'une valeur de 20 A).

Lorsqu'un courant de valeur iₛ est détecté dans l'enroulement 6 au moyen du circuit de mesure 18 (temps t₁ en figure 2, la durée t₁ - t₀ étant variable en fonction de la tension utilisée), le circuit de commande 12 provoque le démarrage des signaux de commande A, B, C, A', B', C' à destination des interrupteurs commandés du circuit de puissance 14 afin d'initier (c'est-à-dire de commencer) la génération d'un champ tournant aux moyens des enroulements 10 du stator.

Ainsi, la phase de pré-magnétisation permet d'atteindre exactement la valeur de courant déterminé comme optimal (courant dit *"de saturation"* à partir duquel la force électromotrice de la machine tournante n'augmente plus), quelles que soient les conditions externes, notamment de tension, du circuit électronique.

L'exemple qui précède n'est qu'un mode possible de mise en oeuvre de l'invention, qui ne s'y limite pas.

On peut notamment remplacer la mesure du courant dans l'enroulement 6 par une mesure de la tension appliquée à cet enroulement, auquel cas la durée de la phase de pré-magnétisation est par exemple déterminée par le circuit de commande 12 en fonction de la tension mesurée, par exemple aux moyens d'une table de correspondance (où LUT de l'anglais « Look-Up Table ») déterminée le cas échéant en fonction d'essais préalables.

## Revendications

1. Machine électrique tournante comprenant un premier élément (10) apte à générer un champ magnétique tournant par rapport au premier élément et un second élément pourvu d'un enroulement (6) apte à être parcouru par un courant de manière à ce que le champ magnétique tournant entraine le second élément en rotation, **caractérisée par** :
- des moyens de mesure (18) d'une grandeur électrique (1) au moins liée audit courant ;
- des moyens (12) pour initier la génération du champ magnétique tournant à partir d'un instant déterminé en fonction de la grandeur électrique mesurée.

2. Machine électrique selon la revendication 1, **caractérisée en ce que** ladite grandeur électrique est ledit courant.

3. Machine électrique selon la revendication 2, **caractérisée en ce que** les moyens pour initier la génération du champ magnétique tournant sont aptes à initier ladite génération lorsque le courant mesuré atteint une valeur seuil iₛ.

4. Machine électrique selon la revendication 1, **caractérisée en ce que** la grandeur électrique est une tension appliquée audit enroulement.

5. Machine électrique selon la revendication 4, **caractérisée en ce que** les moyens pour initier la génération du champ magnétique tournant sont aptes à initier ladite génération après une durée d'application de ladite tension déterminée en fonction de la grandeur électrique mesurée.

6. Machine électrique selon l'une quelconque des revendications précédentes, **caractérisée en ce qu'**elle est agencée pour être intégrée dans un système à tension variable pouvant varier entre deux valeurs limites

7. Procédé de commande d'une machine électrique tournante comprenant un premier élément (10) apte à générer un champ magnétique tournant par rapport au premier élément et un second élément pourvu d'un enroulement (6) apte à être parcouru par un courant de manière à ce que le champ magnétique tournant entraine le second élément en rotation, **caractérisé par** les étapes suivantes :
- mesure d'une grandeur électrique au moins liée audit courant ;
- génération du champ magnétique tournant à partir d'un instant déterminé en fonction de la grandeur électrique mesurée.

8. Procédé selon la revendication 7, **caractérisé en ce que** ladite grandeur électrique est ledit courant.

9. Procédé selon la revendication 8, **caractérisé en ce que** la génération du champ magnétique tournant débute lorsque le courant mesuré atteint une valeur seuil.

10. Procédé selon la revendication 7, **caractérisé en ce que** la grandeur électrique est une tension appliquée audit enroulement.

11. Procédé selon la revendication 10, **caractérisé en ce que** la génération du champ magnétique tournant débute après une durée d'application de ladite tension déterminée en fonction de la grandeur électrique mesurée.

## Patentansprüche

1. Elektrische Drehmaschine, umfassend ein erstes Element (10), das geeignet ist, ein drehendes Magnetfeld in Bezug auf das erste Element zu erzeugen, und ein zweites Element, das mit einer Wicklung (6) versehen ist, die geeignet ist, von einem Strom derart durchflossen zu werden, dass das drehende Magnetfeld das zweite Element in Drehung versetzt, **gekennzeichnet durch**:
- Mittel zum Messen (18) einer elektrischen Größe (1), die mindestens mit dem Strom verbunden ist;
- Mittel (12) zum Initiieren des Erzeugens des drehenden Magnetfeldes ab einem Zeitpunkt, der in Abhängigkeit von der gemessenen elektrischen Größe bestimmt wird.

2. Elektrische Maschine nach Anspruch 1, **dadurch gekennzeichnet, dass** die elektrische Größe der Strom ist.

3. Elektrische Maschine nach Anspruch 2, **dadurch gekennzeichnet, dass** die Mittel zum Initiieren des Erzeugens des drehenden Magnetfeldes geeignet sind, das Erzeugen zu initiieren, wenn der gemessene Strom einen Schwellenwert iₛ erreicht.

4. Elektrische Maschine nach Anspruch 1, **dadurch gekennzeichnet, dass** die elektrische Größe eine Spannung ist, die an die Wicklung angelegt wird.

5. Elektrische Maschine nach Anspruch 4, **dadurch gekennzeichnet, dass** die Mittel zum Initiieren des Erzeugens des drehenden Magnetfeldes geeignet sind, das Erzeugen nach einer Dauer des Anlegens der Spannung zu initiieren, die in Abhängigkeit von der gemessenen elektrischen Größe bestimmt wird.

6. Elektrische Maschine nach einem der vorhergehenden Ansprüche, **dadurch gekennzeichnet, dass** sie ausgebildet ist, um in ein System mit variabler Spannung integriert zu werden, das zwischen zwei Grenzwerten variieren kann.

7. Verfahren zur Steuerung einer elektrischen Drehmaschine, umfassend ein erstes Element (10), das geeignet ist, ein drehendes Magnetfeld in Bezug auf das erste Element zu erzeugen, und ein zweites Element, das mit einer Wicklung (6) versehen ist, die geeignet ist, von einem Strom derart durchflossen zu werden, dass das drehende Magnetfeld das zweite Element in Drehung versetzt, das durch die folgenden Schritte gekennzeichnet ist:
- Messen einer elektrischen Größe, die mindestens mit dem Strom verbunden ist;
- Erzeugen des drehenden Magnetfeldes ab einem Zeitpunkt, der in Abhängigkeit von der gemessenen elektrischen Größe bestimmt wird.

8. Verfahren nach Anspruch 7, **dadurch gekennzeichnet, dass** die elektrische Größe der Strom ist.

9. Verfahren nach Anspruch 8, **dadurch gekennzeichnet, dass** das Erzeugen des drehenden Magnetfeldes beginnt, wenn der gemessene Strom einen Schwellenwert erreicht.

10. Verfahren nach Anspruch 7, **dadurch gekennzeichnet, dass** die elektrische Größe eine Spannung ist, die an die Wicklung angelegt wird.

11. Verfahren nach Anspruch 10, **dadurch gekennzeichnet, dass** das Erzeugen des drehenden Magnetfeldes nach einer Dauer des Anlegens der Spannung beginnt, die in Abhängigkeit von der gemessenen elektrischen Größe bestimmt wird.

## Claims

1. Rotating electric machine comprising a first element (10) capable of generating a magnetic field rotating in relation to the first element and a second element provided with a winding (6) capable of being passed through by a current in such a way that the rotating magnetic field drives the second element in rotation, **characterized by**:
- means (18) for measuring an electrical quantity (1) at least linked to said current;
- means (12) for initiating the generation of the rotating magnetic field from an instant determined as a function of the electrical quantity measured.

2. Electric machine according to Claim 1, **characterized in that** said electrical quantity is said current.

3. Electric machine according to Claim 2, **characterized in that** the means for initiating the generation of the rotating magnetic field are capable of initiating said generation when the measured current reaches a threshold value iₛ.

4. Electric machine according to Claim 1, **characterized in that** the electrical quantity is a voltage applied to said winding.

5. Electric machine according to Claim 4, **characterized in that** the means for initiating the generation of the rotating magnetic field are capable of initiating said generation after a period of application of said voltage determined as a function of the electrical quantity measured.

6. Electric machine according to any one of the preceding claims, **characterized in that** it is arranged to be incorporated in a system with variable voltage that can vary between two limit values.

7. Method for controlling a rotating electric machine comprising a first element (10) capable of generating a magnetic field rotating in relation to the first element and a second element provided with a winding (6) capable of being passed through by a current in such a way that the rotating magnetic field drives the second element in rotation, **characterized by** the following steps:
- measurement of an electrical quantity at least linked to said current;
- generation of the rotating magnetic field from an instant determined as a function of the electrical quantity measured.

8. Method according to Claim 7, **characterized in that** said electrical quantity is said current.

9. Method according to Claim 8, **characterized in that** the generation of the rotating magnetic field begins when the measured current reaches a threshold value.

10. Method according to Claim 7, **characterized in that** the electrical quantity is a voltage applied to said winding.

11. Method according to Claim 10, **characterized in that** the generation of the rotating magnetic field begins after a period of application of said voltage determined as a function of the electrical quantity measured.
